# EUROPEAN PATENT SPECIFICATION

(11) **EP 0 372 422 B1**
(45) Date of publication and mention of the grant of the patent: **08.03.1995**
(21) Application number: 89122224.2
(22) Date of filing: 01.12.1989
(51) Int. Cl.: B62M 7/04, B62K 11/04

(54) **Motorcycle engine drive layout**
Motor- und Antriebsanordnung für ein Motorrad
Disposition du moteur et de la transmission pour une motocyclette

(30) Priority: 02.12.1988 JP 306654/88
(43) Date of publication of application: 13.06.1990
(73) Proprietor: YAMAHA MOTOR CO., LTD., Iwata-shi Shizuoka-ken, 438 (JP)
(72) Inventor: Utsumi, Yogi, Sizuoka-ken (JP)
(74) Representative: Grünecker, Kinkeldey, Stockmair & Schwanhäusser Anwaltssozietät

(56) References cited:
- EP-A- 0 006 936
- EP-A- 0 207 618
- FR-A- 2 490 578
- GB-A- 154 707

## Description

This invention relates to a motorcycle according to the preamble of claim 1.

As is well known, a motorcycle is an extremely compact type of vehicle. As such, it is desirable to maintain all of the components of the motorcycle in a very small spatial requirement while, at the same time, providing the necessary performance. Also, it is known to utilize a combined engine transmission assembly for a motorcycle wherein the transmission of the motorcycle is contained within the crankcase of the engine. However, by combining the transmission, crankcase and engine all into one unit, some problems can be encountered in still maintaining a compact configuration. Specifically, it is also desirable to maintain a low center of gravity. This frequently cannot be done when the transmission is combined with the crankcase of the engine.

EP-A-6936 shows a motorcycle comprising a frame assembly for journaling a rear wheel and a front fork together with a front wheel. An internal combustion engine, together with a transmission means for driving said rear wheel, is carried by said frame assembly. Said transmission means comprises an intermediate shaft placed between a crankshaft and a driving shaft which is driven by said intermediate shaft which in turn is driven by said crankshaft. Said engine additionally comprises a cylinder bank with cylinder bores and a carburetor extending from a rear side of said cylinder bank.

Since said cylinder bank is disposed rather steep, the centre of gravity is quite high so the handling of the motorcycle gets worse.

It is, therefore, the object of this invention to provide an improved engine and drive layout for a motorcycle that provides a compact and yet highly serviceable assembly, wherein the center of gravity is maintained at a low level.

This object is solved according to the present invention by improving the motorcycle, as indicated in the preamble portion of claim 1, in that said cylinder bore axis extends through an area between the uppermost portion of the front wheel and the lowermost point of said head pipe when said motocycle is upright and unladen, and that said induction system extends upwardly with respect to said cylinder bore and is positioned rearwardly of said head pipe and forwardly of said engine output shaft and said transmission primary and secondary shafts.

A preferred embodiment is subject-matter of the subclaim.

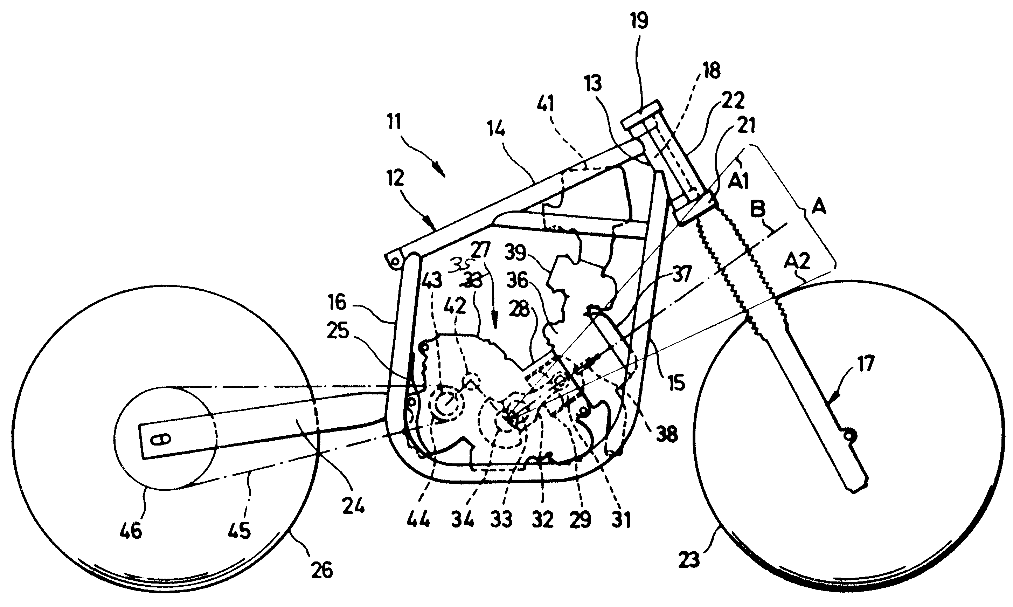

In the following, the present invention is explained in greater detail by means of a preferred embodiment thereof in conjunction with the associated drawing, wherein the single figure of the drawing illustrates in side elevation a motorcycle constructed in accordance with an embodiment of the invention.

In the single figure of the drawings, a motorcycle constructed in accordance with an embodiment of the invention is identified generally by the reference numeral 11. Certain components of the motorcycle, which form no part of the invention, have been deleted in the figure so as to more clearly show the inventive construction. Specifically, the invention relates to the way the engine and transmission are laid out in the motorcycle and, for that reason, components such as the seat, fuel tank and handlebars have not been depicted. Where components are not illustrated, it may be assumed that they may be of any conventional nature.

The motorcycle 11 includes a frame assembly, indicated generally by the reference numeral 12 and which is of the welded up tubular type. This frame assembly 12 includes a head pipe 13, a main tube 14 and front and rear down tubes 15 and 16, respectively. The down tubes 15 and 16 are connected to each other by a generally horizontally extending portion. The head pipe 13 journals a front fork assembly, indicated generally by the reference numeral 17, for steering movement about an axis defined by a steering tube 18 that is journaled within the head pipe 13. The steering tube 18 is connected to upper and lower brackets 19 and 21 which, in turn, are connected to a main member 22 of the fork assembly 17. The fork assembly 17 may include a suitable suspension mechanism and also journals a front wheel 23 for rotation in a known manner.

A trailing arm assembly 24 is pivotally connected at its forward end to a supporting bracket 25 that is carried by the rear down tube 16 and rotatably journals a rear wheel 26 at its rear end.

For driving the rear wheel 26, there is provided within the opening defined by the down tubes 15 and 16 of the frame assembly 12 a combined engine transmission unit, indicated generally by the reference numeral 27. The engine transmission unit 27 includes an internal combustion engine that has a cylinder block 28 in which one or more aligned cylinder bores are formed by inserted liners 29. Pistons 31 reciprocate within the respective cylinder bores and are connected by connecting rods 32 to the throws 33 of a crankshaft 34. The crankshaft 34 is rotatably journaled within a combined crankcase transmission assembly, indicated generally by the reference numeral 35.

A cylinder head 36 is affixed to the cylinder block 28 and carries the valving arrangement for the cylinders, which may be of any known type, and which is accessible through a valve cover 37. The valves may be operated by any known type of overhead cam mechanism which is driven from the crankshaft 34 in any suitable manner.

Spark plugs 38 are also mounted in the cylinder block 28 for firing the charge in the individual cylinder bores defined by the liners 29 in a known manner.

A fuel/air charge is supplied to the individual cylinders of the engine from one or more carburetor assemblies 39 which are depicted as being of the down draft type and which draw air through a combined air cleaner and silencer assembly 41 that is positioned below the main pipe 14 and behind the head pipe 13 of the frame assembly 12.

It should be noted that the cylinder block 28 and engine transmission assembly 27 is disposed in the frame assembly 12 in an orientation so that the axis B of the cylinder bores is inclined to both the horizontal and vertical and passes between the area between the top of the front wheel 23 and the bottom of the head pipe 13. This area is denoted by the dimension A in the figure and passes between the lines A1 and A2, which lines also intersect the axis of rotation of the crankshaft 34. The configuration shown in the figure is that which is assumed by the motorcycle 11 when it is in an upright position but is unladen.

The transmission assembly for the motorcycle contained within the crankcase 35 includes a primary shaft 42 that is driven from the crankshaft 34 in a suitable manner as by a gear transmission or a chain transmission. A plurality of change speed gears are carried on the primary shaft 42 and on a secondary or output shaft 43 which is also contained within the crankcase 35. It should be noted that a clutch of any suitable type is mounted on the input end of the primary transmission shaft 42 for selective coupling and uncoupling of this shaft from drive with the crankshaft 34. The specific transmission and change speed gearing arrangement may be of any known type, however, it should be noted that the axis of the transmission primary shaft 42 is disposed above a line connecting the axis of rotation of the crankshaft 34 with the secondary shaft 43.

A driving sprocket 44 is affixed to the outer end of the transmission secondary shaft 43 and a chain 45 encircles this sprocket and a sprocket 46 affixed for rotation with the rear wheel 26 for driving the rear wheel.

It should be readily apparent from the foregoing description that the described motorcycle construction permits a very compact assembly and one which is very serviceable. Because of the specific inclination of the cylinder bore axis described and the location of the transmission primary shaft above the crankshaft and secondary shaft, a very compact arrangement can be achieved while maintaining a low center of gravity and still good serviceability for the motorcycle.

## Claims

1. A motorcycle (11) comprising a frame assembly (12) having a head pipe (13) journaling a front fork (15) for steering movement, a front wheel (23) rotatably journaled by said front fork (17), said front wheel (23) having an uppermost portion disposed below a lowermost portion of said head pipe (13), a rear wheel (26) journaled for rotation by said frame assembly (12), an internal combustion engine (27) carried by said frame assembly (12), transmission means for driving said rear wheel (26) from said engine (27) comprising a change speed transmission having a primary shaft (42) driven by the engine output shaft (34), a secondary shaft (43) driving said rear wheel (26) and a plurality of change speed gear sets therebetween, said transmission primary shaft (42) is disposed above a line connecting the axis of rotation of the crankshaft (34) with the secondary shaft (43), and an induction system (39) for said engine; said engine having only a single cylinder bank (28) with at least one cylinder bore disposed with its axis inclined to both the horizontal and vertical, **characterized in that**, said cylinder bore axis extends through an area between the uppermost portion of the front wheel (23) and the lowermost point of said head pipe (13) when said motorcycle (11) is upright and unladen, and that said induction system (39) extends upwardly with respect to said cylinder bore and is positioned rearwardly of said head pipe (13) and forwardly of said engine output shaft (34) and said transmission primary and secondary shafts (42, 43).

2. A motorcycle according to claim 1, **characterized in that** said engine comprises a plurality of parallel cylinder bores.

## Patentansprüche

1. Kraftrad (11) mit einer Rahmenkonstruktion (12), die ein Kopfrohr (13) zur drehbaren Lagerung einer Vordergabel (15) für Lenkbewegungen aufweist, einem Vorderrad (23), das durch die Vordergabel (17) drehbar gelagert ist, wobei ein oberster Abschnitt des Vorderrades (23) unterhalb eines untersten Abschnittes des Kopfrohres (13) angeordnet ist, einem Hinterrad (26), das durch die Rahmenkonstruktion (12) drehbar gelagert ist, einem Verbrennungsmotor (27), der an der Rahmenkonstruktion (12) gelagert ist, einer Getriebeeinrichtung zum Antrieb des Hinterrades (26) von dem Motor (27) her, mit einem Schaltgetriebe, das eine Primärwelle (42), die von der Motorabtriebswelle (34) angetrieben ist, eine Sekundärwelle (43), die das Hinterrad (26) antreibt und eine Mehrzahl von zwischengeschalteter Schaltgetriebe-Zahnrad-Sätzen aufweist, wobei die Getriebeprimärwelle (42) oberhalb einer Geraden angeordnet ist, die die Rotationsachse der Kurbelwelle (34) mit der Sekundärwelle (43) verbindet, und einem Einlaßsystem (39) für den Motor, wobei der Motor nur eine einzige Zylinderbank (28) aufweist, mit zumindest einer Zylinderbohrung, die mit Ihrer Achse sowohl zur Horizontalen als auch zur Vertikalen geneigt angeordnet ist, **dadurch gekennzeichnet**, daß die Zylinderbohrungsachse durch einen Bereich zwischen dem obersten Abschnitt des Vorderrades (23) und dem untersten Punkt des Kopfrohres (13) verläuft, wenn das Motorrad (11) aufrecht und unbeladen ist, und daß das Einlaßsystem (39) sich in Bezug auf die Zylinderbohrung nach oben erstreckt und hinter dem Kopfrohr (13) und vor der Motorabtriebswelle (34) und der Getriebeprimär- und -sekundärwelle (42, 43) angeordnet ist.

2. Kraftrad nach Anspruch 1, **dadurch gekennzeichnet**, daß der Motor eine Mehrzahl von zueinander parallelen Zylinderbohrungen aufweist.

## Revendications

1. Motocyclette (11) comprenant un cadre (12) comportant un tube de tête (13) soutient une fourche avant (17) pour un mouvement de direction, une roue avant (23) soutienne en rotation par ladite fourche avant (17), ladite roue avant (23) comportant une partie supérieure disposée au-dessous d'une partie inférieure dudit tube de tête (13) , une roue arrière (26) soutenue pour rotation par ledit cadre (12), un moteur à combustion interne (27) porté par ledit cadre (12), un moyen de transmission pour entrainer ladite roue arrière (26) à partir dudit moteur (27), comprenant une transmission à changement de vitesse comportant un arbre primaire (42) commandé par l'arbre de sortie du moteur (34), un arbre secondaire (43) commandant ladite roue arrière (26) et, entre eux, une pluralité de jeux d'engrenages de changement de vitesse, ledit arbre primaire de transmisison (42) est disposé au-dessus d'une ligne reliant l'axe de rotation du vilebrequin (34) à l'arbre secondaire (43), et un système d'admisison (39) pour ledit moteur ; ledit moteur comportant seulement une seule ligne de cylindres (28) ayant au moins un alésage disposé avec son axe incliné à la fois par rapport à l'horizontale et à la verticale, caractérisé en ce que ledit axe d'alésage s'étend à travers une zone située entre la partie supérieure de la roue avant (23) et le point inférieur dudit tube de tête (13) lorsque ladite motocyclette (11) est d'aplomb et non chargée et en ce que ledit système d'admission (39) s'étend vers le haut par rapport audit alésage et est situé vers l'arrière dudit tube de tête (13) et vers l'avant dudit arbre de sortie du moteur (34) et desdits arbres de transmission primaire et secondaire (42, 43).

2. Motocyclette selon la revendication 1, caractérisée en ce que ledit moteur comprend une pluralité d'alésages parallèles de cylindres.
